# EUROPÄISCHE PATENTSCHRIFT

(11) **EP 1 095 969 B1**
(45) Veröffentlichungstag und Bekanntmachung des Hinweises auf die Patenterteilung: **14.07.2004**
(21) Anmeldenummer: 00123588.6
(22) Anmeldetag: 27.10.2000
(51) Int. Cl.: C08J 9/14, C08J 9/12

(54) **Alternative Treibmittel mit Wasserbestandteil und Ketonen als Lösungsvermittler**
Alternative blowing agent containing water and ketone as solubility improver
Agent d'expansion de remplacement contenant de l'eau et une cétone comme améliorateur de solubilité

(30) Priorität: 29.10.1999 DE 19952452
(43) Veröffentlichungstag der Anmeldung: 02.05.2001
(73) Patentinhaber: Gefinex Jackon GMBH, 33803 Steinhagen (DE)
(72) Erfinder: Willetal, Jürgen, 29462 Wustrow (DE); Plate, Mark, Dr., 29410 Salzwedel (DE); Schulze, Ulfried, 29416 Binde (DE); Timan, Bernardus, 29416 Binde (DE); Uustalu, Jan, 10124 Tallin (EE)
(74) Vertreter: Kaewert, Klaus

(56) Entgegenhaltungen:
- WO-A-96/14354
- FR-A- 2 235 157
- US-A- 5 182 308
- US-A- 5 939 463

## Beschreibung

Die Erfindung betrifft die Herstellung von Kunststoffschaumsträngen durch Extrusion unter Verwendung eines Kunststoffes mit einem Anteil von mindestens 50 Gew% Styrolpolymerisat (PS) oder mindestens 50 Gew% Polypropylen (PP) oder mindestens 50 Gew% Polyethylen (PE) oder PMMA (Polyymethylmethacylat) oder PET (Polyethylenterephathalat), insbesondere die Herstellung von Schaumplatten.

Kunststoffschaum kann auf verschiedenen Wegen hergestellt werden. Eine bedeutende Herstellung verwendet sogenannte Extruder. Dabei wird Kunststoff in fester Form in den Extruder eingegeben und dort unter entsprechendem Druck und Temperatur aufgeschmolzen. In dem schmelzflüssigen Zustand werden Additive und Treibmittel sehr homogen verteilt. Im Produktionsablauf haben Additive z.B. die Aufgabe von Stabilisatoren, Gleit-, Schmier- oder Nukleierungsmitteln. Ferner gibt es Zuschläge zur Produktbeeinflussung, z.B. Effektstoffe, Flammhemmer und Farbstoffe. Auch Füllstoffe müssen als Zuschläge angesehen werden.

Die Treibmittel wurden in früherer Zeit üblicherweise als chemische Treibmittel zusammen mit dem Kunststoff und den Zuschlägen aufgegeben. In zeitgemäßen Anlagen wird ein flüssiges/gasförmiges Treibmittel aufgegeben, wenn der Kunststoff aufgeschmolzen ist. Das Zugeben des Treibmittels erfolgt unabhängig von der Bauart des Extruders an geeigeneter Stelle in der Verarbeitungsstrecke des Extruders.

Bei den Extrudern wird grob zwischen den Einschneckenextrudern, den Doppelschneckenextrudern und den Planetwalzenextrudern unterschieden. Bei den Einschneckenextrudern und Doppelschneckenextrudern gibt die Bezeichnung Aufschluß über die verwendete Anzahl von Schnecken.

Abhängig von der Art und Steigung der Schneckengänge bewirkt eine Schneckendrehung einen Transport des Kunststoffes. Zusätzlich wird auf den Kunststoff wird ein Druck ausgeübt. Dabei erfährt der Kunststoff eine Verformung und Erwärmung. Die Erwärmung wird parallel durch eine beheizte Schnecke und einen beheizten, die Schnecke umschließenden Schneckenzylinder gesteigert, bis der Kunststoff schmelzflüssig ist.

Im schmelzflüssigen Zustand lassen sich die oben beschriebenen Additive, Zuschläge und Treibmittel sehr vorteilhaft im Kunststoff homogenisieren/einmischen.

Für den Schäumungsprozeß ist es erforderlich, daß die treibmittelbeladene Schmelze aus einem hohen Druckniveau vor der Austrittsdüse des Extruders in ein geringes Druckniveau, z.B. Normaldruck geführt wird. Den Druckaufbau leisten ein Düsenspalt, der einen hohen Austrittswiderstand aufbaut. Gegen den Widerstand arbeitet die Schnecke und/oder eine zwischengeschaltete Schmelzepumpe. Der austretende Schaum wird bei der Herstellung von Schaumplatten in einen Kalibrator geführt. Der Kalibrator begrenzt das Wachstum in der Dicke.

In der Vergangenheit ist die Schaumextrusion von der Verwendung von fluorchlorkohlenwasserstoffhaltigen Treibmitteln beherrscht worden. Das Treibverhalten und der Einfluß auf das Wärmedämmverhalten von Kunststoffschaum waren überaus günstig. Mit derartigen Treibmitteln waren Strangdicken von 140 mm und mehr erreichbar.

Trotzt der Handhabungsfreundlichkeit mußten die FCKW-Treibmittel wegen der mit ihnen verbundenen Umweitschädigung verlassen werden. Sie besitzen ein hohes ozonschädigendes Potential und haben einen großen Treibhauseffekt. Die Auslauffristen für derartige Treibmittel sind zum Teil schon seit vielen Jahren bekannt und zum Teil auch bereits abgelaufen. Gleichwohl ist es bislang nur in bestimmten Grenzen gelungen, die FCKW-Treibmittel durch alternative Treibmittel zu ersetzen. Neue, sogenannte alternative Treibmittel sind z.B. Kohlendioxid (CO2̂), Stickstoff (N2̂) und Kohlenwasserstoffe und weitere halogenfreie organische Substanzen mit einem Siedepunkt kleiner/gleich 110 Grad Celsius. Diese Treibmittel sind seit längerem bekannt. Ihr Handling ist ungleich schwieriger.

Seit langem ist die Fachwelt um eine Vereinfachung des Schäumens mit alternativen Treibmitteln und um eine Verbesserung der Schaumqualität bemüht. Dabei wird allgemein zum einen das hohe Treibvermögen der alternativen Treibmittel als großes Problem angesehen. Zum anderen haben viele Schaumhersteller Schwierigkeiten Kunststoffschaumplattendicken von mehr als 50/60 mm mit ausreichender Qualität (Geschlossenzelligkeit, feine gleichmäßige Zellstruktur) zu erreichen. Manche Hersteller überschreiten diese Dicke geringfügig. Die Produktion ist aber sehr unwirtschaftlich, weil mit größer werdender Dicke immer mehr Ausschuß anfällt, der wieder zurückgeführt werden muß. Die Rückführung erfolgt durch Zerkleinerung und Erzeugung ungeschäumten Granulates aus dem zerkleinerten Schaum. Mit dem gewonnenen Granulat kann der Schäumvorgang wiederholt werden. Als Verlust fällt dabei der Aufwand für die Rückführung und der Aufwand für die neuerliche Schaumerzeugung an. Bei starkem Wettbewerb entscheiden solche Kosten bereits über Gewinn- oder Verlustbetrieb.

Die Schwierigkeiten beim Extrudieren werden im wesentlichen durch die übermäßige Treibkraft der alternativen Treibmittel verursacht. Vereinfacht gesehen treiben die allseits befürworteten alternativen Treibmittel den Kunststoff schlagartig/explosionsartig auf.

Dadurch entstehen leicht große und unterschiedliche Zellen im Kunststoff. Das reduziert die Schaumqualität bereits entscheidend. Mit größerer Plattendicke wächst auch die Gefahr platzender Zellen.
Darüber hinaus zeigt ein alternativ getriebener Kunststoffschaum eine geringere Isolierungswirkung als FCKW-getriebene Schäume.
Dementsprechend ist die Fachwelt seit Jahren intensiv um eine Verbesserung der Extrusion mit alternativen Treibmitteln bemüht.

Auch der Erfindung liegt die Aufgabe zugrunde, die Qualität alternativ getriebener Kunststoffschäume zu verbessern. Dabei knüpft die Erfindung an einen Vorschlag aus dem Jahre 1989 (deutsches Patent 3943265) an, bei den alternativen Treibmitteln eine Kombination mit Wasser zu erwägen.
Dieser Vorschlag ist danach von verschiedenen Kunststoffschaumherstellern untersucht worden. Es wurde festgestellt, daß durch Erhöhung des Wasseranteiles im Treibmittel die Zellgröße des Schaumes stark vergrößert wird. Deshalb ist die Umsetzung solcher Überlegungen über Versuche nicht hinausgegangen. Die Erfindung führt das darauf zurück, daß mit Wasser als Treibmittel das Problem besteht, daß durch hydrophobe Eigenschaft des Polymers das Wasser schlecht im Polymer homogenisiert/verteilt werden kann.
Obige Aussage wird durch die Untersuchungen aus der DE 3930847 A1 bestätigt. Dort ist im Zusammenhang mit Alkohol und Wasser als Treibmittel die Zellgröße wiedergegeben worden. Dabei sind feine, gleichmäßige Zellstrukturen nur für Wasseranteile bis 1 Gew% verzeichnet. Die angegebenen groben Zellstrukturen kennzeichnen eine in der Praxis unbrauchbare Schaumqualität. D.h. die Schaumqualität muß zumindest annähernd an die Qualität FCKW-getriebener Schäume herankommen. Annähernd heißt in dem Sinne, daß die physikalischen Eigenschaften (wie z.B. Wärmeleitfähigkeit, Druckfestigkeit und Wärmeformbeständigkeit) alternativ getriebener Schäume an die FCKW-getriebener Schäume herankommt und/oder daß eine Schaumplattendicke von mehr als 100 mm, vorzugsweise mindestens 140 mm erreicht wird.

Gleichwohl wendet sich die Erfindung dem älteren Vorschlag des deutschen Patentes 3943265 wieder zu. Dabei geht die Erfindung von der Überlegung aus, daß zwar von dem Wasser bei dem Austreten aus dem Extruder durch das Verdampfen eine Kühlwirkung ausgeht, daß die bisher in die Schmelze einmischbaren Wassermengen aber noch zu gering sind, um eine ausreichende Kühlwirkung im Schaum zu entfalten. In dem Sinne sind die bekannt gewordenen älteren Vorschläge eher als Zielvorstellung denn als Realität einzustufen. Auch der von der Anmelderin bereits in 1989 entwickelten Vorschlag, nämlich die DE 3943265 A1, enthält noch keine umsetzbaren Mengenanteile an Wasser im Treibmittel. Zwar sind dort Emulgatoren als Hilfsmittel zum Einmischen des Wasser angesprochen.
Emulgatoren haben grundsätzlich einen bipolaren Aufbau und sind nicht ionische (neutrale) Moleküle. Es kommt bei Emulgatoren zu einer tröpfchenweisen Verteilung, vergleichbar mit Magarine aus Fett und Wasser.
Ähnlich ist die DE 19813108 A1 zu beurteilen. Auch dort ist für die Verwendung von Wasser als Treibmittel ein Emulgator vorgeschlagen. Im Unterschied zu der zuvor erläuterten DE 3943265 A1 spricht die DE 19813108 die tröpfchenweise Verteilung ausdrücklich an.

Auch die US5182308A gibt dem Durchschnittsfachmann keine Hilfe.
Dort sind zwar Kohlendioxid und Alkohol oder Ketone im Treibmittel vorgesehen, so daß kleine Zellen entstehen.
Wasser ist als Treibmittel aber nicht offenbart.
Eine Anwendung dieses Lösungsvorschlages ist nicht bekannt geworden.
Es ist auch nicht mit praxisgerechten Ergebnissen zu rechnen.
Bei der PCT/EP95/04122 ist eine ähnliche Situation gegeben.
Dort sind zwar zur Kunststoffschaumherstellung Kohlendioxidanteile im Treibmittel vorgesehen, auch in einer Variante mit Aceton, aber Wasser ist nicht genannt.
Erschwerend kommt hinzu, daß an der Textstelle, welche die Acetonzumischung offenbart, keine schlüssigen Anteilsmengen erkennbar sind.

Noch weiter entfernt von der Frage der Handhabung von Kohlendioxid als Treibmittel ist die US5939463A. Dort ist das Ziel, beim Herstellen von Polystyrolschaum die Emission an organischen flüchtigen Bestandteilen (VOC) gering zu halten. Insbesondere soll das Treibmittel enthalten
a) mindestens einen wenig entweichenden Bestandteil aus VOC und
b) mindestens einen niedrig flüchtigen Bestandteil, der nicht ein VOC ist
c) optional einen hoch flüchtigen Bestandteil, der nicht ein VOC ist

Der Treibmittelbestandteil zu a) soll aus der Gruppe von Pentan, Butan und Hexan ausgewählt werden.
Der Treibmittelbestandteil zu b) soll aus der Gruppe Aceton, Aceton/Wasser, Methylacetat und Mischungen davon ausgewählt werden.
Der optionale Treibmittelbestandteil zu c) soll aus der Gruppe Kohlendioxid und Stickstoff ausgewählt werden.

Hintergrund der Entwicklung der US5939463A sind schlechte Erfahrungen bei der Handhabung von Kohlendioxid als wesentlicher Treibmittelbestandteil.
Dem Kohlendioxid werden in dieser Druckschrift folgende Nachteile zugeschrieben:
d) übermäßiger Schäumfaktor
e) Gefahr der Schüsselung an extrudierten Bahnen
f) höhere Viskosität der Schmelze und verringerte Extrusionsleistung
g) Emissionsquelle

In der Druckschrift wird gleichwohl empfohlen, einen gewissen Anteil zu c) im Treibmittel zu halten, um die Schaumdichte zu steuern. In den aufgezeigten Beispielen der Druckschrift schwankt der Kohlendioxidanteil zwischen 10 und 19% vom Treibmittel. Der bekannte Schaum soll vorteilhaft thermoformierbar sein.
Der hergestellte Schaum soll eine Dicke von 0,03 bis 1 inch (1 inch=2,54 cm), vorzugsweise bis 0,5 inch aufweisen. Dabei wird ein Schaumschlauch hergestellt und zwischen Walzen zu einer Platte verformt.
Dem Durchschnittsfachmann ist damit jedoch kein Weg aufgezeigt, um einen Kunststoffschaum größerer Dicke mit Kohlendioxid zu schäumen.
Vielmehr rät diese Druckschrift die mindestens teilweise Abkehr vom Kohlendioxid und die Hinwendung zu Pentan, Butan und Hexan als Treibmittel. Dabei wird übersehen, daß es sich um brennbare Treibmittel handelt, die auch aus dem Kunststoffschaum ausdiffundieren und in der eingesetzten Menge eine Brandgefahr bilden. Die Brandgefahr in Hallen einer Kunststoffschaumfertigung ist eine ernste Angelegenheit.
Außerdem lehrt diese Druckschrift die Abkehr von der herkömmlichen Herstellung von Kunststoffschaumplatten größerer Dicke. Die herkömmliche Herstellung sieht vor, daß der Schaum zwischen die Platten eines Kalibrators tritt, der die Abmessungen des entstehenden Schaumstranges definiert. Davon will sich der Durchschnittsfachmann nicht lösen.
Abgesehen von den vorstehend beschriebenen Nachteilen erlaubt die in der US5939463 vorgeschlagene Technik auch keine Herstellung dicker Platten, weil ein dazu notwendiger entsprechend dicker Schaumschlauch nicht stabilisierbar ist.
Hinzu kommt, daß der Schlauch an seiner Innenfläche nur eine sehr beschränkt belastbare Verbindung eingeht, wenn er nach dem bekannten Verfahren zusammengedrückt wird.

Nach der Erfindung soll an der herkömmlichen Schaumherstellung dicker Platten festgehalten werden. Es soll die keine unzulässige Brandgefahr verursacht werden. Ferner wird daran festgehalten, den Schäumvorgang im wesentlichen mit Kohlendioxid zu bewirken.
Nach der Erfindung wird das durch einen erhöhten Wasseranteil im Treibgas bzw. im Kunststoff erreicht. Dies wird durch Ketone als Lösungsvermittler in der Schmelze gemäß Anspruch 1 und in bevorzugter Fortbildung nach den Unteransprüche erreicht.

Ein Hinweis auf einen Lösungsvermittler ist auch der DE 19542060 A1 nicht zu entnehmen. Dort ist zwar die Verwendung von Kieselsäure angesprochen. Die Kieselsäure dient dabei als Wasserspender. Die Kieselsäure ist aber kein Lösungsvermittler. Sie kommt regelmäßig als Feststoff vor.

Aus der DE 19615486 ist zwar die Verwendung eines Ketons im Treibmittel zusammen mit Kohlendioxid zu entnehmen. Ein Hinweis auf Wasser ist dieser Druckschrift nicht zu entnehmen, schon gar nicht auf eine Änderung der Aufgabe des Ketons, nämlich auf die Funktion als Lösungsvermittler.

Bei Styrolpolymerisat beträgt die übliche Treibmittelmenge 3 bis 10 Gew% bezogen auf die PS-Menge. Bekannt sind Treibmittelmischungen mit Mischungsanteilen bis 90 Gew% CO2̂ oder anderem alternativen Treibmittel. In Verbindung mit Wasser und Ketonen, vorzugsweise Aceton als Lösungsvermittlern sind folgende Mischungsverhältnisse für das Treibmittel vorgesehen:
- CO2̂: 10 bis 90 Gew% vom Treibmittel, vorzugsweise 20 bis 60 Gew%
- Wasser: 1 bis 50 Gew% vom Treibmittel, vorzugsweise 2 bis 14 Gew%,
- Lösungsvermittler: Ketone/Aceton: 0,1 bis 60 Gew% vom Treibmittel, vorzugsweise 10 bis 50 Gew%, wobei die Menge des Lösungsvermittlers vorzugsweise immer ein Mehrfaches der Wassermenge ist.

Vorzugsweise wird die erfindungsgemäße Treibmittelmischung nur mit 5 bis 9 Gew%, bezogen auf die Einsatzmischung, zugegeben.

Als Ketone kommen z.B. Aceton und Ethylmethylketon in Betracht. Bevorzugt wird Aceton verwendet.

Ionische Tenside besitzen eine ausreichende Temperaturbeständigkeit, um zusätzlich zu den Ketonen im Extruder prozeßfördernd eingesetzt zu werden.

Durch die sehr unterschiedliche Molekülstruktur von Polymer und Wasser kann es bei jeder Temperatur und jedem Druck im Extruder zu einer Phasentrennung von Wasser und Polymer kommen. Die Phasentrennung stört das Schäumen der Polymerschmelze nach Verlassen des Extruders. Es kann zu einer mehr oder weniger starken Verschlechterung der Produkteigenschaften kommen. Durch die Tenside wird die Grenzflächenspannung zwischen den Phasen verringert. Die Phasen können besser miteinander vermischt werden. Es kommt zu einer feineren Schaumstruktur.
Die gewünschte Verteilung von Wasser in der Schmelze kann durch einen Tensidanteil von 0,1 bis 5 Gew%, bezogen auf das Wasser, unterstützt werden.

Geeignete ionische Tenside sind:
Alkylethersulfate
Alkylphenolethersulfate
Alkylsulfate
Alkylsulfonate
Aklylbenzolsulfonate
Alkyphenolethersu fate
Fettalkohlethersulfate
Alkylphenolethoxylate
Dialkylsulfosuccinate
Fettsäuresalze
Alkyletherphosphate
Wahlweise werden dem Treibmittel auch beigemischt
0 bis 10 Gew% Stickstoff, bezogen auf das Treibmittel und/oder
0 bis 70 Gew% HFKW (R134a und/oder R152a und/oder weitere HFKW)
HFKW sind 1,1,1,2-Tetrafluorethan (R134a) und 1,1-Difluorethan (R152a). Weitere HFKW, die wegen ihrer Molekülgröße und damit verbunden geringeren Diffusion die Wärmedämmung verbessern, sind Derivate des Propans (z.B. R245fa) und des Butans (z.B. R365mfc 1,1,1,3,3-Pentafluorbutan).

Soweit Wasser angesprochen ist, handelt es sich um destilliertes Wasser.

Alle Treibmittelbestandteile sind in ihren Mengen absolut angegeben. Soweit weniger reine Treibmittelbestandteile zum Einsatz kommen, sind die Verunreinigungen zu berücksichtigen.

Bevorzugt finden folgende Treibmittelmischungen Anwendung:

| | |
|---|---|
| Kohlendioxid | 10 bis 90 Gew% vorzugsweise 20 bis 60 Gew% vom Treibmittel |
| Wasser | 1 bis 50 Gew% vorzugsweise 1 bis 14 Gew% vom Treibmittel |
| Aceton | 0,1 bis 50 Gew% vom Treibmittel |
| R 134a | bis zu 70 Gew%, vorzugsweise bis 30 Gew% vom Treibmittel |
| R 152a | bis 70 Gew%, vorzugsweise bis 60 Gew% vom Treibmittel |
| R 245fa | 0 bis 70 Gew%, vorzugsweise bis 30 Gew% vom Treibmittel |
| R 365mfc | 0 bis 70 Gew%, vorzugsweise bis 30 Gew% vom Treibmittel |

In diesen bevorzugten Treibmittelmischungen ist die Menge der HFKW vorzugsweise insgesamt nicht mehr als 70 Gew% vom Treibmittel, noch weiter bevorzugt nicht mehr als 60 Gew%.

In dieser bevorzugten Treibmittelmischung beziehen sich die angegebenen Gew% auf die Treibmittelmenge.

Nachfolgend sind einige andere Treibmittelmischungsbeispiele wiedergegeben:
1. für die Herstellung von Polystyrolschaum mit einem Treibmittelanteil von 6,6Gew%, bezogen auf die PS-Menge:

| | |
|---|---|
| Kohlendioxid | 52,5 Gew%, bezogen auf das Treibmittel |
| Wasser | 11,4 Gew%, bezogen auf das Treibmittel |
| Aceton | 36,1 Gew%, bezogen auf das Treibmittel |

In weiteren Mischungsbeispielen weichen die Werte bis zu 30%, vorzugsweise bis zu 10%, von ihrer angegebenen Größe ab.
2. für die Herstellung von Polystyrolschaum mit einem Treibmittelanteil von 8 Gew%, bezogen auf die PS-Menge:

| | |
|---|---|
| R152a | 61 Gew%, bezogen auf das Treibmittel |
| Kohlendioxid | 23 Gew%, bezogen auf das Treibmittel |
| Wasser | 2 Gew%, bezogen auf das Treibmittel |
| Aceton | 14 Gew%, bezogen auf das Treibmittel |

In weiteren Mischungsbeispielen weichen die Werte bis zu 30%, vorzugsweise bis zu 10%, von der oben angegebenen Größe ab.

Alle oben dargelegten Ausführungen zu PS beziehen sich auf eine PS-Schaumdichte von 25 bis 45 kg pro Kubikmeter.
Bei PP ist mit einer Treibmittelmenge von 6 bis 9 Gew%, bezogen auf die PP-Menge, zu rechnen. Mit dieser Treibmittelmenge wird PP-Schaum mit einem Raumgewicht von 25 bis 35 kg pro Kubikmeter erzeugt.
Bei PE ist mit einer Treibmittelmenge von 9 bis 12 Gew%, bezogen auf die PE-Menge, zu rechnen. Mit dieser Treibmittelmenge wird PE-Schaum mit einem Raumgewicht von 15 bis 25 kg pro Kubikmeter erzeugt.

| | |
|---|---|
| 3. Kohlendioxid | 49 Gew% vom Treibmittel |
| R365mfc | 10 Gew% vom Treibmittel |
| Wasser | 3 Gew% vom Treibmittel |
| Aceton | 38 Gew% vom Treibmittel |

In weiteren Mischungsbeispielen weichen die Werte bis zu 30%, vorzugsweise bis zu 10%, von der oben angegebenen Größe ab.

Es hat sich gezeigt, daß über die Wechselwirkung zwischen Aceton und Wasser hinaus prozeßfördernde Eigenschaften genutzt werden kann. Aceton ist nicht nur ein erfindungsgemäßer Lösungsvermittler für das Wasser, es ist gleichzeitig auch eine Verarbeitungshilfe für das Polymer, da es durch seine Anwesenheit die Viskosität erniedrigt und so die Verarbeitung verbessert. Es entsteht eine verbesserte Schaumqualität.

Soweit in den vorstehenden Ausführungsbeispielen der Erfindung eine Variation der Treibmittelanteile vorgesehen ist, werden bei Veränderung eines oder mehrerer Anteile die übrigen Anteile angepaßt, so daß die Treibmittelanteile in Summe nicht über 100% hinausgehen.
In anderen Ausführungsbeispielen können einzelne oder mehrere Treibmittelanteile unter Beibehaltung der übrigen Treibmittelanteile oder auch sonst erhöht oder verringert werden, so daß die Gesamtmenge des Treibmittels verändert wird.

Wahlweise werden die Treibmittelbestandteile einzeln oder vorgemischt aufgegeben. Wahlweise werden die Treibmittelbestandteile zumindest teilweise an unterschiedlichen Stellen des Extruders zugemischt. Damit kann unterschiedlichem Mischungsverhalten oder Lösungsverhalten Rechnung getragen werden, indem die schlechter zu lösenden Bestandteile vor den besser zu lösenden Bestandteilen in den Kunststoff eingearbeitet wird.

## Patentansprüche

1. Herstellung von Kunststoffschaum aus einem Kunststoff der mindestens 50 Gew% PS (Polystyrol) oder PP (Polypropylen) oder PE (Polyethylen) oder PMMA (Polymethylmethacrylat) oder PET (Polyethylenterephthalat) enthält, wobei ein Treibmittel zur Anwendung kommt, das immer enthält:
a) 10 bis 90 Gew% Kohlendioxid, bezogen auf das Treibmittel
b) 1 bis 50 Gew% Wasser, bezogen auf das Treibmittel
c) 0,1 bis 60 Gew% Ketone als Lösungsvermittler für das Wasser, bezogen auf das Treibmittel.
wobei aus dem Kunststoff in einem Extruder eine Schmelze erzeugt und das Treibmittel in der Schmelze verteilt wird und die treibmittelbeladene Schmelze zwischen die Platten eines Kalibrators extrudiert wird und dort zu einer Platte aufschäumt, so daß Plattendicken von mehr als 60mm erreicht werden können.

2. Herstellung nach Anspruch 1, **gekennzeichnet durch** die Verwendung von Aceton und/oder Ethymethylketon als Ketone.

3. Herstellung nach Anspruch 1 oder 2, **gekennzeichnet durch** die Verwendung von Treibmitteln folgender Zusammensetzung:
a) Kohlendioxid 10 bis 90 Gew% vom Treibmittel
b) Wasser 1 bis 50 Gew% vom Treibmittel
c) Aceton 0,1 bis 60 Gew% vom Treibmittel
d) R 134a bis 70 Gew% vom Treibmittel
e) R 152a bis 70 Gew% vom Treibmittel
f) R 245fa bis 70 Gew% vom Treibmittel
g) R 365mfc bis 70 Gew% vom Treibmittel
wobei die Gesamtmenge der Anteile d) bis g) nicht mehr als 70 Gew% beträgt oder
a) Kohlendioxid mit 10 bis 90 Gew% vom Treibmittel,
b) Wasser 1 bis 50 Gew% vom Treibmittel
c) Ketone 0,1 bis 60 Gew%.

4. Herstellung nach Anspruch 1 oder 2, **gekennzeichnet durch** die Verwendung von Treibmitteln folgender Zusammensetzung:
a) Kohlendioxid 20 bis 60 Gew% vom Treibmittel
b) Wasser 1 bis 14 Gew% vom Treibmittel
c) Aceton 10 bis 50 Gew% vom Treibmittel
d) R 134a bis 30 Gew%vom Treibmittel
e) R 152a bis 60 Gew% vom Treibmittel
f) R 245fa bis 30 Gew% vom Treibmittel
g) R 365mfc bis 30 Gew% vom Treibmittel
wobei die Gesamtmenge der Anteile d) bis g) nicht mehr als 70 Gew% beträgt oder
d) Kohlendioxid mit 20 bis 60 Gew% vom Treibmittel,
e) Wasser 1 bis 14 Gew% vom Treibmittel
f) Ketone 10 bis 50 Gew%

5. Herstellung nach Anspruch 3 oder 4, **gekennzeichnet durch** die Herstellung von Polystyrolschaum mit einem Treibmittelanteil von 6,6 Gew% bezogen auf die PS-Menge und folgender Treibmittelzusammensetzung:
a) Kohlendioxid 52,5 Gew% vom Treibmittel
b) Wasser 11,4 Gew% vom Treibmittel
c) Aceton 36,1 Gew% vom Treibmittel
wobei die vorstehend angegebenen Gew% bis zu 30% abweichen.

6. Herstellung nach Anspruch 5, **dadurch gekennzeichnet, daß** die angegebenen Werte bis 10% abweichen.

7. Herstellung nach Anspruch 3 oder 4, **gekennzeichnet durch** die Herstellung von Polystyrolschaum mit einem Treibmittelanteil von 8 Gew%, bezogen auf die PS-Menge und folgender Treibmittelzusammensetzung:
a) R 152a 61 Gew % vom Treibmittel
b) Kohlendioxid 23 Gew% vom Treibmittel
c) Wasser 2 Gew% vom Treibmittel
d) Aceton 14 Gew% vom Treibmittel
wobei die vorstehend angegebenen Gew% bis zu 30% abweichen.

8. Herstellung nach Anspruch 3 oder 4, **dadurch gekennzeichnet, daß** die angegebenen werte bis zu 10% abweichen.

9. Herstellung nach Anspruch 3 oder 4, **dadurch gekennzeichnet, daß** bei der Herstellung von Polystyrolschaum folgende Treibmittel-Zusammensetzung angewendet wird:
a) Kohlendioxid 49 Gew% vom Treibmittel
b) R 365mfc 10 Gew% vom Treibmittel
c) Wasser 3 Gew% vom Treibmittel
d) Aceton 38 Gew% vom Treibmittel
wobei die vorstehend angegebenen Gew% bis zu 30% abweichen.

10. Herstellung nach Anspruch 9, **dadurch gekennzeichnet, daß** die angegebenen Werte bis zu 10% abweichen.

11. Herstellung nach einem der Ansprüche 3 bis 10, **dadurch gekennzeichnet, daß** bei der Herstellung von Polystyrol-Schaumplatten mit den beschriebenen Treibmitteln ein Schaum mit einem Raumgewicht von 25 bis 45 kg pro Kubikmeter erzeugt wird.

12. Herstellung nach Anspruch 3 oder 4, **dadurch gekennzeichnet, daß** bei der Herstellung von Polypropylen-Schaum bei der beschriebenen Treibmittelzusammensetzung eine Treibmittelmenge Anwendung findet, deren Treibmittelanteil 6 bis 9 Gew% beträgt, bezogen auf das PP-Gewicht, wobei ein Schaum mit einem Raumgewicht von 25 bis 35 kg pro Kubikmeter erzeugt wird.

13. Herstellung nach Anspruch 3 oder 4, **dadurch gekennzeichnet, daß** bei der Herstellung von Polyethylen-Schaum bei der beschriebenen Treibmittelzusammensetzung eine Treibmittelmenge Anwendung findet, deren Treibmittelanteil 9 bis 12 Gew% beträgt, bezogen auf das PE-Gewicht, wobei ein Schaum mit einem Raumgewicht von 15 bis 25 kg pro Kubikmeter erzeugt wird.

14. Herstellung nach einem der Ansprüche 1 bis 13, **gekennzeichnet durch** die zusätzliche Verwendung von Stickstoff wobei der Anteil bis 10 Gew% vom gesamten Treibmittel betragen kann.

15. Herstellung nach einem der Ansprüche 1 bis 14, **gekennzeichnet durch** die zusätzliche Verwendung von ionischen Tensiden.

16. Herstellung nach Anspruch 15, **gekennzeichnet durch** die Verwendung von 0,1 bis 5 Gew% ionischen Tensiden, bezogen auf das Wasser.

17. Herstellung nach Anspruch 15 oder 16, **gekennzeichnet durch** die Verwendung folgender ionsischen Tenside aus folgender Gruppe:
Alkyletehersulfate und/oder
Alkylphenolethersulfate und/oder
Alkylsulfate und/oder
Alkylsulfonate und/oder
Alkylbenzolsulfonate und/oder
Alkylphenolethersulfate und/oder
Fettalkoholethersulfate und/oder
Alkylphenolethoxylate und/oder
Fettalkoholethoxylate und/oder
Dialkysulfoxuccinate und/oder
Fettsäuresalze und/oder
Alkyletherphosphate

18. Herstellung nach einem der Ansprüche 1 bis 17, **dadurch gekennzeichnet, daß** die Treibmittelbestandteile zumindest teilweise an unterschiedlichen Stellen des Extruders aufgegeben werden.

19. Herstellung nach Anspruch 18, **dadurch gekennzeichnet, daß** die Treibmittelbestandteile einzeln oder vorgemischt aufgegeben werden.

20. Herstellung nach Anspruch 18 oder 19, dadurch gekennzeichent, daß die schlechter zu lösenden Treibmittelbestandteile vor den besser zu lösenden Treibmittelbestandteilen eingearbeitet werden.

## Claims

1. Production of plastic foam from a plastic comprising at least 50% by weight of PS (polystyrene) or PP (polypropylene) or PE (polyethylene) or PMMA (polymethyl methacrylate) or PET (polyethylene terephthalate), where a blowing agent is used which always comprises:
a) from 10 to 90% by weight of carbon dioxide, based on the blowing agent
b) from 1 to 50% by weight of water, based on the blowing agent
c) from 0.1 to 60% by weight of ketones as solubiliser for the water, based on the blowing agent
in which a melt is generated from the plastic in an extruder, and the blowing agent is distributed in the melt, and the blowing agent-charged melt is extruded between the plates of a calibrator, where it is foamed to give a board, enabling board thicknesses of greater than 60 mm to be achieved.

2. Production according to Claim 1, **characterized by** the use of acetone and/or ethyl methyl ketone as ketoncs.

3. Production according to Claim 1 or 2, **characterized by** the use of blowing agents of the following composition:
a) carbon dioxide from 10 to 90% by weight of the blowing agent
b) water from 1 to 50% by weight of the blowing agent
c) acetone from 0.1 to 60% by weight of the blowing agent
d) R 134a up to 70% by weight of the blowing agent
e) R 152a up to 70% by weight of the blowing agent
f) R 245fa up to 70% by weight of the blowing agent
g) R 365mfc up to 70% by weight of the blowing agent
where the total amount of fractions d) to g) is not greater than 70% by weight or
a) carbon dioxide from 10 to 90% by weight of the blowing agent
b) water from 1 to 50% by weight of the blowing agent
c) ketones from 0.1 to 60% by weight.

4. Production according to Claim 1 or 2, **characterized by** the use of blowing agents of the following composition:
a) carbon dioxide from 20 to 60% by weight of the blowing agent
b) water from 1 to 14% by weight of the blowing agent
c) acetone from 10 to 50% by weight of the blowing agent
d) R 134a up to 30% by weight of the blowing agent
e) R 152a up to 60% by weight of the blowing agent
f) R 245fa up to 30% by weight of the blowing agent
g) R 365mfc up to 30% by weight of the blowing agent
where the total amount of fractions d) to g) is not greater than 70% by weight or
a) carbon dioxide from 20 to 60% by weight of the blowing agent
b) water from 1 to 14% by weight of the blowing agent
c) ketones from 10 to 50% by weight.

5. Production according to Claim 3 or 4, **characterized by** the production of polystyrene foam having a blowing-agent content of 6.6% by weight, based on the amount of PS, and the following blowing-agent composition:
a) carbon dioxide 52.5% by weight of the blowing agent
b) water 11.4% by weight of the blowing agent
c) acetone 36.1% by weight of the blowing agent
where the % by weight indicated above deviate by up to 30%.

6. Production according to Claim 5, **characterized in that** the stated values deviate by up to 10%.

7. Production according to Claim 3 or 4, **characterized by** the production of polystyrene foam having a blowing-agent content of 8% by weight, based on the amount of PS, and the following blowing-agent composition:
a) R 152a 61% by weight of the blowing agent
b) carbon dioxide 23% by weight of the blowing agent
c) water 2% by weight of the blowing agent
d) acetone 14% by weight of the blowing agent
where the % by weight indicated above deviate by up to 30%.

8. Production according to Claim 3 or 4, **characterized in that** the stated values deviate by up to 10%.

9. Production according to Claim 3 or 4, **characterized by** the production of polystyrene foam having the following blowing-agent composition:
a) carbon dioxide 49% by weight of the blowing agent
b) R 365mfc 10% by weight of the blowing agent
c) water 3% by weight of the blowing agent
d) acetone 38% by weight of the blowing agent
where the % by weight indicated above deviate by up to 30%.

10. Production according to Claim 9, **characterized in that** the stated values deviate by up to 10%.

11. Production according to one of Claims 3 to 10, **characterized in that**, in the production of polystyrene foam boards using the blowing agents described, a foam having a density of from 25 to 45 kg per cubic metre is produced.

12. Production according to Claim 3 or 4, **characterized in that**, in the production of polypropylene foam using the blowing-agent composition described, use is made of an amount of blowing agent whose blowing-agent content is from 6 to 9% by weight, based on the weight of the PP, producing a foam having a density of from 25 to 35 kg per cubic metre.

13. Production according to Claim 3 or 4, **characterized in that**, in the production of polyethylene foam using the blowing-agent composition described, use is made of an amount of blowing agent whose blowing-agent content is from 9 to 12% by weight, based on the weight of the PE, producing a foam having a density of from 15 to 25 kg per cubic metre.

14. Production according to one of Claims 1 to 13, **characterised by** the additional use of nitrogen, where the proportion can be up to 10% by weight of all the blowing agent.

15. Production according to one of Claims 1 to 14, **characterized by** the additional use of ionic surfactants.

16. Production according to Claim 15, **characterized by** the use of from 0.1 to 5% by weight of ionic surfactants, based on the water.

17. Production according to Claim 15 or 16, **characterized by** the use of the following ionic surfactants from the following group:
alkyl ether sulphates and/or
alkylphenol ether sulphates and/or
alkyl sulphates and/or
alkyl sulphonates and/or
alkyl benzenesulphonates and/or
alkylphenol ether sulphates and/or
fatty alcohol ether sulphates and/or
alkylphenol ethoxylates and/or
fatty alcohol ethoxylates and/or
dialkyl sulphosuccinates and/or
fatty acid salts and/or
alkyl ether phosphates.

18. Production according to one of Claims 1 to 17, **characterized in that** the blowing-agent constituents are introduced at least partly at different points of the extruder.

19. Production according to Claim 18, **characterized in that** the blowing-agent constituents are introduced individually or pre-mixed.

20. Production according to Claim 18 or 19, **characterized in that** the blowing-agent constituents that are more difficult to dissolve are incorporated before the blowing-agent constituents that are easier to dissolve.

## Revendications

1. Préparation d'une mousse plastique à partir d'un matériau plastique qui contient au moins 50 % en poids de PS (polystyrène) ou de PP (polypropylène) ou de PE (polyéthylène) ou de PMMA (poly(méthacrylate de méthyle)) ou de PET (poly(téréphtalate d'éthylène)), un agent porogène étant utilisé, qui contient toujours :
a) 10 à 90 % en poids de dioxyde de carbone par rapport à l'agent porogène,
b) 1 à 50 % en poids d'eau par rapport à l'agent porogène,
c) 0,1 à 60 % en poids de cétones servant de tiers-solvant pour l'eau, par rapport à l'agent porogène,
une masse fondue étant produite à partir du matériau plastique dans une extrudeuse, et l'agent porogène étant réparti dans la masse fondue, et la masse fondue chargée d'agent porogène étant extrudée entre les plaques d'un dispositif de calibrage et y étant expansée pour former une plaque, de façon à pouvoir réaliser des épaisseurs de plaque supérieures à 60 mm.

2. Préparation selon la revendication 1, **caractérisée par** l'utilisation d'acétone et/ou de méthyléthylcétone en tant que cétones.

3. Préparation selon la revendication 1 ou 2, **caractérisée par** l'utilisation d'agents porogènes ayant la composition suivante :
a) dioxyde de carbone 10 à 90 % en poids par rapport à l'agent porogène
b) eau 1 à 50 % en poids par rapport à l'agent porogène
c) acétone 0,1 à 60 % en poids par rapport à l'agent porogène
d) R 134a jusqu'à 70 % en poids par rapport à l'agent porogène
e) R 152a jusqu'à 70 % en poids par rapport à l'agent porogène
f) R 245fa jusqu'à 70 % en poids par rapport à l'agent porogène
g) R 365mfc jusqu'à 70 % en poids par apport à l'agent porogène,
la quantité totale des constituants d) à g) ne dépassant pas 70 % en poids, ou bien
a) dioxyde de carbone 10 à 90 % en poids par rapport à l'agent porogène
b) eau 1 à 50 % en poids par rapport à l'agent porogène
c) cétones 0,1 à 60 % en poids.

4. Préparation selon la revendication 1 ou 2, **caractérisée par** l'utilisation d'agents porogènes ayant la composition suivante :
a) dioxyde de carbone 20 à 60 % en poids par rapport à l'agent porogène
b) eau 1 à 14 % en poids par rapport à l'agent porogène
c) acétone 10 à 50 % en poids par rapport à l'agent porogène
d)R 134a jusqu'à 30 % en poids par rapport à l'agent porogène
e)R 152a jusqu'à 60 % en poids par rapport à l'agent porogène
f)R 245fa jusqu'à 30 % en poids par rapport à l'agent porogène
g)R 365mfc jusqu'à 30 % en poids par rapport à l'agent porogène,
la quantité totale des constituants d) à g) ne dépassant pas 70 % en poids, ou bien
a)dioxyde de carbone 20 à 60 % en poids par rapport à l'agent porogène
b) eau 1 à 14 % en poids par rapport à l'agent porogène
c) cétones 10 à 50 % en poids.

5. Préparation selon la revendication 3 ou 4, **caractérisée par** la fabrication d'une mousse de polystyrène contenant 6,6 % en poids d'agent porogène par rapport à la quantité de PS, la composition de l'agent porogène étant la suivante :
a) dioxyde de carbone 52,5 % en poids par rapport à l'agent porogène
b) eau 11,4 % en poids par rapport à l'agent porogène
c) acétone 36,1 % en poids par rapport à l'agent porogène
les pourcentages en poids indiqués ci-dessus subissant un écart jusqu'à 30 %.

6. Préparation selon la revendication 5, **caractérisée en ce que** les valeurs indiquées présentent un écart allant jusqu'à 10 %.

7. Préparation selon la revendication 3 ou 4, **caractérisée par** la fabrication d'une mousse de polystyrène contenant 8 % en poids d'agent porogène par rapport à la quantité de PS, l'agent porogène ayant la composition suivante :
a) R 152a 61 % en poids par rapport à l'agent porogène
b) dioxyde de carbone 23 % en poids par rapport à l'agent porogène
c) eau 2 % en poids par rapport à l'agent porogène
d) acétone 14 % en poids par rapport à l'agent porogène
les pourcentages en poids indiqués ci-dessus pouvant présenter un écart allant jusqu'à 30 %.

8. Préparation selon la revendication 3 ou 4, **caractérisée en ce que** les valeurs indiquées peuvent présenter un écart allant jusqu'à 10 %.

9. Préparation selon la revendication 3 ou 4, **caractérisé en ce que**, lors de la fabrication de mousse de polystyrène, on utilise la composition suivante pour l'agent porogène :
a) dioxyde de carbone 49 % en poids par rapport à l'agent porogène
b) R 365mfc 10 % en poids par rapport à l'agent porogène
c) eau 3 % en poids par rapport à l'agent porogène
d) acétone 38 % en poids par rapport à l'agent porogène
les pourcentages en poids indiqués ci-dessus pouvant présenter un écart allant jusqu'à 30 %.

10. Préparation selon la revendication 9, **caractérisée en ce que** les valeurs indiquées peuvent présenter un écart allant jusqu'à 10 %.

11. Préparation selon l'une des revendications 3 à 10, **caractérisée en ce que**, lors de la fabrication de plaques en mousse de polystyrène avec les agents porogènes décrits, il y a production d'une mousse ayant une masse volumique de 25 à 45 kg par mètre cube.

12. Préparation selon la revendication 3 ou 4, **caractérisée en ce que**, lors de la fabrication d'une mousse de polypropylène avec la composition d'agent porogène décrite, on utilise une quantité de l'agent porogène qui est de 6 à 9 % en poids par rapport au poids du PP, une mousse étant produite, qui a une masse volumique de 25 à 35 kg par mètre cube.

13. Préparation selon la revendication 3 ou 4, **caractérisée en ce que**, lors de la fabrication d'une mousse de polyéthylène avec la composition d'agent porogène décrite, on utilise une quantité de l'agent porogène qui est de 9 à 12 % en poids par rapport au poids de PE, une mousse étant produite, qui a une masse volumique de 15 à 25 kg par mètre cube.

14. Préparation selon l'une des revendications 1 à 13, **caractérisée par** l'utilisation supplémentaire d'azote, dont la proportion peut aller jusqu'à 10 % en poids par rapport à la totalité de l'agent porogène.

15. Préparation selon l'une des revendications 1 à 14, **caractérisée par** l'utilisation additionnelle de tensioactifs ioniques.

16. Préparation selon la revendication 15, **caractérisée par** l'utilisation de 0,1 à 5 % en poids de tensioactifs ioniques, par rapport à l'eau.

17. Préparation selon la revendication 15 ou 16, **caractérisée par** l'utilisation des tensioactifs ioniques suivants, appartenant aux groupes suivants :
alkylsulfates éthoxylés et/ou
alkylphénolsulfates éthoxylés et/ou
alkylsulfates et/ou
alkylsulfonates et/ou
alkylbenzènesulfonates et/ou
alkylphénolsulfates éthoxylés et/ou
(alcool gras)sulfates éthoxylés et/ou
alkylphénols éthoxylés et/ou
alcools gras éthoxylés et/ou
dialkylsulfosuccinates et/ou
sels d'acides gras et/ou
alkylphosphates éthoxylés.

18. Préparation selon l'une des revendications 1 à 17, **caractérisée en ce que** les constituants porogènes sont au moins partiellement introduits en différents points de l'extrudeuse.

19. Préparation selon la revendication 18, **caractérisée en ce que** les constituants porogènes sont introduits à titre individuel ou après avoir été mélangés au préalable.

20. Préparation selon la revendication 18 ou 19, **caractérisés en ce que** les constituants porogènes difficiles à dissoudre sont incorporés avant les constituants porogènes qui sont plus faciles à dissoudre.
